# EUROPÄISCHE PATENTSCHRIFT

(11) **EP 2 301 667 B1**
(45) Veröffentlichungstag und Bekanntmachung des Hinweises auf die Patenterteilung: **16.12.2020**
(21) Anmeldenummer: 10174068.6
(22) Anmeldetag: 26.08.2010
(51) Int. Cl.: B02C 19/06, C09C 3/10, C08K 9/06, C09D 7/42, C09D 7/65, C09C 1/30, C09C 3/04

(54) **Niederdruckvermahlungsverfahren**
Low pressure grinding method
Procédé de broyage basse pression

(30) Priorität: 29.09.2009 DE 102009045116
(43) Veröffentlichungstag der Anmeldung: 30.03.2011
(73) Patentinhaber: Evonik Operations GmbH, 45128 Essen (DE)
(72) Erfinder: Paulat, Florian, 50321 Brühl (DE); Lindner, Gottlieb, 53175 Bonn (DE); Meier, Karl, 53347 Alfter (DE)
(74) Vertreter: Evonik Patent Association

(56) Entgegenhaltungen:
- EP-A1- 1 160 279
- EP-A2- 0 341 383
- WO-A1-94/18277
- WO-A1-2009/068379
- CN-A- 1 887 972
- DE-A1-102004 027 874
- DE-A1-102006 023 193

## Beschreibung

Die vorliegende Erfindung betrifft ein Verfahren zur Erzeugung feiner Partikel mittels einer Strahlmühle und zur gleichzeitigen Oberflächenmodifizierung der feinen Partikel sowie die mit diesem Verfahren hergestellten Produkte.

Bei Vermahlungen mittels Strahlmühlen besteht das zu mahlende und/oder zu sichtende Gut aus gröberen und feineren Partikeln, die in einem Luftstrom mitgeführt werden und den Produktstrom bilden, der in ein Gehäuse eines Windsichters der Strahlmühle eingeführt werden kann. Der Produktstrom gelangt in radialer Richtung in ein Sichtrad des Windsichters. In dem Sichtrad werden die gröberen Partikel aus dem Luftstrom ausgeschieden und der Luftstrom verlässt mit den feinen Partikeln axial das Sichtrad durch ein Abströmrohr. Der Luftstrom mit den auszufilternden oder herzustellenden feinen Partikeln kann dann einem Filter zugeführt werden, in dem ein Fluid, wie beispielsweise Luft, und feine Partikel voneinander getrennt werden.

Aus der DE 198 24 062 A1 ist eine solche Strahlmühle bekannt, in deren Mahlkammer ferner zumindest ein energiereicher Mahlstrahl aus Heissdampf mit hoher Strömungsenergie eingeführt wird, wobei die Mahlkammer außer der Einlasseinrichtung für den zumindest einen Mahlstrahl einen Einlass für das Mahlgut und einen Auslass für das Produkt aufweist, und wobei im Bereich des Zusammentreffens von Mahlgut und zumindest einem Mahlstrahl aus Heißdampf und Mahlgut zumindest etwa die gleiche Temperatur haben.

Weiterhin ist ein entsprechender Windsichter insbesondere für eine Strahlmühle z.B. aus der EP 0 472 930 B1 bekannt. Dieser Windsichter und dessen Betriebsverfahren sind grundsätzlich äußerst zufriedenstellend.

Die zuvor genannten Verfahren haben den Nachteil, dass sie nur mit einem hohen apparativen Aufwand betrieben werden können und zudem sehr energieintensiv sind. Um dieses Problem zu minimieren wird in der DE 10 2006 023 193 ein Verfahren vorgeschlagen, bei dem der Mahldruck unter 4,5 bar gesenkt wird. Dieses Verfahren ist energieeffizienter, weist jedoch den Nachteil auf, dass nach wie vor hohe Temperaturen des Betriebsmittels (Mahlgases) gegeben sind. Zur Erzeugung des Betriebsmitteldrucks und der Betriebsmitteltemperatur verweist die DE 10 2006 023 193 z.B. auf die DE 198 24 062 bzw. schlägt die Verwendung eines Kompressors vor.

Alternativ zu Strahlmühlen ist die Verwendung von mechanischen bzw. klassierenden mechanischen Mühlen bekannt. Diese Mühlen weisen jedoch den Nachteil auf, dass das Mahlgut auf Grund des direkten Kontaktes mit dem Rotor/Stator einen hohen Abrieb an der Mühle verursacht. Dies wiederum führt zu hohen Wartungskosten für die Mühle, gleichzeitig aber auch zu unerwünschten Kontaminationen des Mahlguts.

Aufgabe der vorliegenden Erfindung war es daher ein möglichst energieeffizientes Mahlverfahren bereitzustellen, welches im Vergleich zu einer Vermahlung mit einer mechanischen bzw. klassierenden mechanischen Mühle zu geringeren Kontaminationen des Mahlguts führt. In einer speziellen Aufgabe war es Ziel, dass die Kornverteilung des Mahlguts nach dem neuen Verfahren zumindest gleichwertig oder besser ist als bei Mahlverfahren mit mechanischen bzw. klassierenden mechanischen Mühlen.

Eine spezielle Aufgabe der vorliegenden Erfindung bestand darin, ein möglichst energieeffizientes Mahlverfahren bereitzustellen, welches im Vergleich zu einer Vermahlung mit einer mechanischen bzw. klassierenden mechanischen Mühle zu geringeren Kontaminationen des Mahlguts führt und dass es ermöglicht während der Vermahlung eine Oberflächenmodifikation des Mahlgutes (z.B. Coatung, Dotierung) durchzuführen.

Eine weitere Aufgabe bestand darin, neuartige pulverförmige Materialien zur Verfügung zu stellen, welche eine geringe Kontamination mit z. B. Eisen aufweisen.

Weitere nicht explizit genannte Aufgaben ergeben sich aus dem Gesamtzusammenhang der nachfolgenden Beschreibung, Ansprüche, Beispiele und Zeichnungen.

Die zuvor genannten Aufgaben werden durch das in den Ansprüchen, der nachfolgenden Beschreibung, den Beispielen und den Zeichnungen näher definierte Verfahren und die dort näher definierten Erzeugnisse gelöst.

Die Erfinder haben überraschend herausgefunden, dass es möglich ist, anorganische und organische Materialien in einer Strahlmühle bei Drücken kleiner 4 bar und bei Temperaturen von weniger als 100 °C derart zu vermahlen, dass diese anschließend ein Partikelspektrum aufweisen, welches zumindest dem entspricht, das erhalten wird, wenn das identische Material in einer Mühle mit Rotor/Stator (klassierend und nicht-klassierend) vermahlen worden wäre. Somit können Produkte mit gleichem Partikelspektrum jedoch geringerem Verunreinigungsgehalt hergestellt werden.

Auf Grund des schonenden Mahlbedingungen ist es mit dem erfindungsgemäßen Verfahren jedoch auch möglich Partikel mit Vergleich zu mechanischen Mühlen reduziertem Feinanteil und/oder somit engerer Partikelgrößenverteilung herzustellen.

Ferner haben die Erfinder herausgefunden, dass es bei diesem Verfahren möglich ist, gleichzeitig mit der Vermahlung eine Coatung bzw. Dotierung des Mahlgutes durchzuführen. Dies ist insbesondere deshalb erwähnenswert, weil es in mechanischen bzw. klassierenden mechanischen Mühlen nicht möglich ist gleichzeitig mit der Vermahlung eine Coatung bzw. Dotierung durchzuführen, da es dort in der Regel zu Anbackungen an Rotor/Stator/Wänden der Mühle kommt und weil Druck und Temperatur im erfindungsgemäßen verfahren recht niedrig sind.

Der niedrige Druck und die niedrige Temperatur ermöglichen zudem den Einsatz von temperatursensiblen Oberflächenmodifizierungsagenzien bzw. die Vermahlung von temperatursensieblen Mahlgütern wie z. B. Zucker welche bei den Strahlvermahlungsverfahren des Standes der Technik nicht verwendet werden können.

Ferner ist erwähnenswert, dass das erfindungsgemäße Trockenvermahlungs- und Coatungsverfahren unter schonenden Bedingungen die Herstellung von Produkten ermöglicht welche nach bekannten Verfahren nicht herstellbar waren. So ist beispielweise die Vermahlung und gleichzeitige Coatung von Kieselsäuren mit Siliconpolyetheracrylat-Polymeren möglich ohne dass der Polyetheranteil verloren geht. Diese Polymere weisen herstellungsbedingt zum Teil einen 10 - 20 Gew.- %igen Überschuss an Polyether auf. Es hat sich gezeigt, dass bei einer klassischen Naßvermahlung dieser Überschuss zum Teil herausgewaschen wird. Beim erfindungsgemäßen Trockenvermahlungsverfahren hingegen bleibt der Polyetherüberschuß erhalten, so dass eine völlig andere Beschichtung der Kieselsäurepartikel hergestellt werden kann. Dies führt zu verbesserten Anwendungstechnischen Eigenschaften der Partikel. Auf der anderen Seite hat das neue Verfahren jedoch auch ökologische und ökonomische Vorteile, da Verunreinigung von Abwässern mit Polyethern deutlich verringert bzw. sogar vermieden werden kann.

Insbesondere bei der Vermahlung von hoch abrasiven Feststoffen, z. B. für die Zahnpflege, weißt das erfindungsgemäße Verfahren besondere Vorteile auf. Diese Stoffe verursachen einen besonders hohen Abrieb an der Mühle, gleichzeitig werden jedoch an Produkte für kosmetische Behandlungen von Mensch und Tier hohe Anforderungen hinsichtlich des Verunreinigungsgehalt gestellt.

Gegenstand der vorliegenden Erfindung ist daher ein Verfahren zur Erzeugung feiner Partikel mittels einer Strahlmühle, dadurch gekennzeichnet, dass das Mahlgas einen Druck von ≤ 4 bar(abs) und eine Temperatur von kleiner 100 °C aufweist.

Gegenstand der vorliegenden Erfindung ist ferner ein Verfahren zur Erzeugung feiner Partikel mittels einer Strahlmühle (1) unter Verwendung komprimierter Gase als Mahlgas, dadurch gekennzeichnet, dass das Mahlgas einen Druck von ≤ 4 bar(abs) und eine Temperatur von kleiner 100 °C aufweist und dass während der Vermahlung ein Coatungsmittel bzw. Dotierungsmittel derart zugegeben wird, dass zumindest Teile der Oberfläche der Partikel des Mahlguts mit dem Coatungsmittel bzw. Dotierungsmittel belegt werden.

Ebenfalls Gegenstand der vorliegenden Erfindung ist eine Strahlmühle, bevorzugt eine Fliessbettgegenstrahlmühle oder eine Dichtbettstrahlmühle oder eine Ovalrohrmühle oder eine Spiralstrahlmühle, dadurch gekennzeichnet, dass zur Druckerzeugung des Betriebsmittels ein Gebläse, bevorzugt ein Drehkolbengebläse oder ein Radialgebläse, verwendet wird.

Das erfindungsgemäße Verfahren stellt ein im Vergleich zu den Verfahren des Standes der Technik erheblich energieoptimiertes Verfahren dar (niedriger Druck, niedrige Temperatur, geringer Verschließ der Mühle, reduzierter apparativer Aufwand).

Die erfindungsgemäße und im erfindungsgemäßen Verfahren bevorzugt eingesetzte Strahlmühle weist gegenüber den Strahlmühlen des Standes der Technik den großen Vorteil auf, dass sie keinen Kompressor oder Druckkessel zur Erzeugung des Drucks und der Temperatur des Betriebsmittels benötigt, sondern, dass ein einfaches Gebläse, vorzugsweise ein Drehkolbengebläse oder ein Radialgebläse verwendet werden kann. Dies reduziert erheblich den apparativen Aufwand, senkt die Anschaffungskosten und reduziert die Instandhaltungskosten. Die Instandhaltungskosten werden auch dadurch reduziert, dass im erfindungsgemäßen Verfahren niedrige Temperaturen und Drücke verwendet werden.

Ein weiterer Vorteil des erfindungsgemäßen Verfahrens ist es, dass das Verfahren mit bereits existierenden Strahlmühlen durchgeführt werden kann.

Die Kornverteilung, der mit dem erfindungsgemäßen Verfahren vermahlenen Produkte, insbesondere der d₅₀-Wert kann analog zu der mittels einer mechanischen bzw. klassierenden mechanischen Mühle erhaltenen Kornverteilung eingestellt werden. Auf Grund des effizienteren Energieumsatzes kann der Feinstanteil im erfindungsgemäßen Mahlgut jedoch - im Vergleich zu einer Vermahlung mittels einer mechanischen bzw. klassierenden mechanischen Mühle - signifikant verringert werden. Dadurch weisen die erfindungsgemäßen Mahlgüter deutlich verbesserte anwendungstechnische Eigenschaften, z. B. eine verringerte Verdickungswirkung, auf. Ein weiterer Vorteil der erfindungsgemäßen Mahlgüter ist deren - im Vergleich zu Mahlgütern welche mit mechanischen bzw. klassierenden mechanischen Mühlen erzeugt wurden - deutlich niedrigere Kontamination mit Abriebsprodukten der Mühle. Dies ist insbesondere bei Produkten, welche eine hohe Reinheit aufweisen müssen, sehr vorteilhaft.

Wie bereits erwähnt ermöglicht das erfindungsgemäße Verfahren zusammen mit der Vermahlung eine Coatung bzw. Dotierung des Mahlgutes durchzuführen. Dies ist insbesondere auch deshalb vorteilhaft, weil diese Coatung bzw. Dotierung bei den niedrigen Temperaturen von weniger als 100°C erfolgen kann und somit Coatungsmittel bzw. Dotierungsmittel bzw. Mahlgüter eingesetzt werden können, die temperaturempfindlich sind (z.B. Zucker, Trimethylolpropan, Tego® Rad 2300 etc.).

Das erfindungsgemäße Verfahren stellt ein schonendes Mahlverfahren dar mit dem die physikochemische Eigenschaften des Mahlgutes, wie z. B. die DBP-Aufnahme, weitgehend erhalten bleiben.

Schließlich ist als Vorteil zu nennen, dass das erfindungsgemäße Verfahren universell, d.h. sowohl für organische als auch für anorganische Stoffe, anwendbar ist. Dadurch unterscheidet sich das Verfahren z. B. von dem aus der DE 10 2006 023 193 beschriebenen Verfahren, welches nur für bestimmte anorganische Stoffe anwendbar ist.

Die Gegenstände der vorliegenden Anmeldung werden nachfolgend im Detail erläutert.

Bevorzugte und/oder vorteilhafte Ausgestaltungen der Erfindung ergeben sich dabei aus den Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnungen lediglich exemplarisch näher erläutert, in denen
Fig. 1 diagrammartig ein Ausführungsbeispiel einer Strahlmühle in einer teilweise geschnittenen Schemazeichnung zeigt,
Fig. 2 ein Ausführungsbeispiel eines Windsichters einer Strahlmühle in vertikaler Anordnung und als schematischer Mittellängsschnitt zeigt, wobei dem Sichtrad das Auslassrohr für das Gemisch aus Sichtluft und Feststoffpartikeln zugeordnet ist, und
Fig. 3 in schematischer Darstellung und als Vertikalschnitt ein Sichtrad eines Windsichters zeigt.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Bei dem Verfahren zur Erzeugung feiner Partikel mittels einer Strahlmühle sind die durch die vorliegende Erfindung vorgesehenen neuen Schritte derart übersichtlich und verständlich, dass sich eine graphische Darstellung der einzelnen Schritte erübrigt.

Das erfindungsgemäße Verfahren ist ein Verfahren zur Erzeugung feiner Partikel mittels einer Strahlmühle unter Verwendung komprimierter Gase als Mahlgas dadurch gekennzeichnet, dass das Mahlgas einen Druck von ≤ 4 bar(abs) und eine Temperatur von weniger als 100°C aufweist.

Das Verfahren kann vorzugsweise ferner dadurch weitergebildet sein, dass die Temperatur des Mahlgases kleiner gleich 95 °C, bevorzugt kleiner gleich 90 °C, besonders bevorzugt kleiner gleich 80 °C und ganz besonders bevorzugt von 15 bis 80 °C. In einer ersten speziell bevorzugten Variante beträgt die Temperatur des Mahlgases 50 bis 80 °C und in einer zweiten speziell bevorzugten Variante 15 bis 50 °C. Die Temperatur der Mahlgases wird am Mahlgaseintritt in die Mühle gemessen.

Der Druck des Mahlgases beträgt vorzugsweise weniger als 3 bar, besonders bevorzugt weniger als 2 bar, ganz besonders bevorzugt weniger als 1 bar, speziell bevorzugt 0,5 bis 1 bar und ganz speziell bevorzugt 0,15 bis 0,5 bar. Folgende Kombinationen von Mahlgasdruck und Temperatur sind besonders bevorzugt: 0,15 bis 0,5 bar und 15 bis 50 °C und 0,15 bis 0,5 bar und 50 bis 80 °C. Beispiele hierfür sind die Kombinationen 0,3 bar und 20 °C bzw. 0,4 bar und 75 °C.

Im erfindungsgemäßen Verfahren können sowohl organische als auch anorganische Stoffe vermahlen werden. Beispiele für organische Stoffe sind Kohlenhydrate (z.B. Zucker) und Carboxymethylcellulose.

Bevorzugte anorganische Stoffe sind amorphe und kristalline anorganische Feststoffe. Wobei es sich bei den kristallinen anorganischen Feststoffen bevorzugt um Titandioxid, Aluminiumoxid und Calciumcarbonat handelt und wobei es sich bei den amorphen Feststoffen bevorzugt um Gele aber auch um andersartige amorphe Feststoffe handelt. Weiterhin bevorzugt sind amorphe und kristalline anorganische Feststoffe wie Keramik (z.B. Sinterkeramik). Besonders bevorzugt handelt es sich um Feststoffe enthaltend oder bestehend aus zumindest einem Metall und/oder Metalloxid, insbesondere um amorphe Oxide von Metallen der 3. und 4. Hauptgruppe des Periodensystems der Elemente. Dies gilt sowohl für die Gele als auch für die amorphen Feststoffe mit andersartiger Struktur. Besonders bevorzugt sind gefällte Kieselsäuren, pyrogene Kieselsäuren, Silikate, Aluminosilikate, Lichtbogenkieselsäure, z. B. Amosil der Fa. Quarzwerke GmbH, Gläser und Silicagele, wobei Silicagele sowohl Hydro- als auch Aero- als auch Xerogele umfassen.

Vorzugsweise wird im erfindungsgemäßen Verfahren eine Fliessbettgegenstrahlmühle oder eine Dichtbettstrahlmühle verwendet.

Zur Bildung der eingebrachten Mahlstrahlen kann als Betriebsmittel, der Begriff Betriebsmittel wird im Rahmen der vorliegenden Erfindung synonym mit den Begriffen Betriebsmedium und Mahlgas verwendet, im Prinzip jeder/jedes bei den Betriebsbedingungen gasförmige Stoff oder Stoffgemisch verwendet werden. Besonders bevorzugt werden Luft und/oder Wasserstoffgas und/oder Argon und/oder Edelgase wie z. B. Helium und/oder Stickstoff und/oder ein Gemisch der genannten Betriebsmittel verwendet. Ganz besonders bevorzugt ist Luft. Die Vewendung inertisierender Gase ist vor allem bei der Vermahlung von oxidationsempfindlichen, bzw. organischen Mahlgütern bevorzugt.

Zur Bildung des Mahlstrahles kann z. B. ein Drucktank aber auch ein Kompressor verwendet werden wie sie in herkömmlichen Strahlmühlenapparaturen vorhanden sind. In einer speziellen Ausführungsform der vorliegenden Erfindung wird der Druck des Mahlstrahles jedoch mittels eines Gebläses, besonders bevorzugt mittels eines Drehkolbengebläses oder Radialventilators, erzeugt. Dadurch können sowohl die Investkosten als auch die Betriebs- und Instandhaltungskosten der Mahlapparatur deutlich gesenkt werden. Diese spezielle neue Strahlmühle mit Gebläse zur Erzeugung des Mahlstrahls ist Gegenstand der vorliegenden Erfindung.

Weiterhin mit Vorzug wird die Strahlmühle mit einem Sichter verbunden. Dabei kann es sich um einen internen als auch um einen externen Sichter handeln. Besonders bevorzugt wird ein in die Strahlmühle integrierter dynamischer Windsichter verwendet. Dabei ist ganz bevorzugt ferner vorgesehen, dass der Windsichter einen Sichtrotor oder ein Sichtrad mit einer mit abnehmendem Radius zunehmenden oder konstanten lichten Höhe enthält, so dass beim Betrieb die durchströmte Fläche des Sichtrotors oder -rades zumindest annähernd konstant ist. Alternativ oder zusätzlich kann vorgesehen sein, dass der Windsichter einen Sichtrotor oder ein Sichtrad mit einem insbesondere auswechselbaren Tauchrohr enthält, das so gestaltet ist, dass es sich mitdreht, wenn der Sichtrotor oder das Sichtrad rotiert.

Noch eine weitere vorzugsweise Ausgestaltung des Verfahrens besteht darin, dass eine Feingutaustrittskammer vorgesehen ist, die in Strömungsrichtung eine Querschnittserweiterung aufweist.

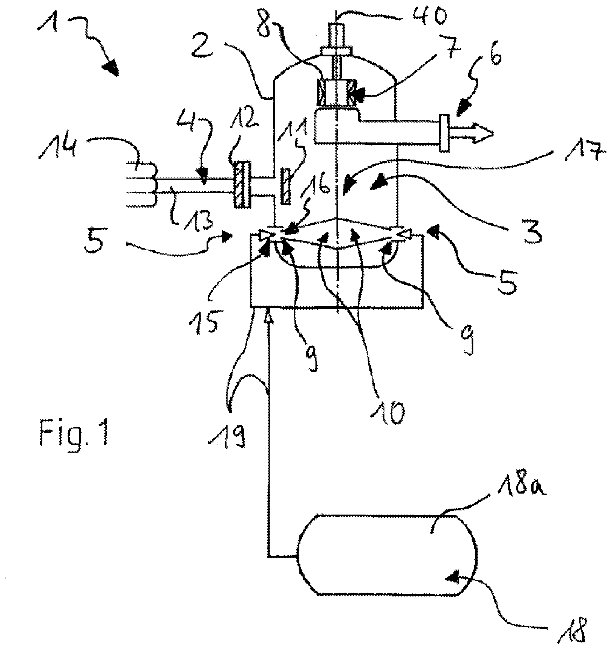

In der Fig. 1 ist ein Ausführungsbeispiel einer Strahlmühle 1 zur Durchführung des vorstehend erläuterten Verfahrens schematisch dargestellt. Wie bereits vorstehend dargelegt, kann das erfindungsgemäße Verfahren ohne weiteres mit Einrichtungen und Mitteln realisierbar, die dem Fachmann an und für sich bekannt sind, wodurch jedoch nicht zum Ausdruck gebracht werden soll, dass dem Fachmann auch die einzelnen Schritte des Verfahrens bekannt wäre, das durch die vorliegende Erfindung neu geschaffen wurde.

Die Strahlmühle 1 gemäß der Fig. 1 enthält ein zylindrisches Gehäuse 2, das eine Mahlkammer 3 umschließt, eine Mahlgutaufgabe 4 etwa in der halben Höhe der Mahlkammer 3, zumindest einen Mahlstrahleinlass 5 im unteren Bereich der Mahlkammer 3 und einen Produktauslass 6 im oberen Bereich der Mahlkammer 3. Dort ist ein Windsichter 7 mit einem drehbaren Sichtrad 8 angeordnet, mit dem das Mahlgut (nicht gezeigt) klassiert wird, um nur Mahlgut unterhalb einer bestimmten Korngröße durch den Produktauslass 6 aus der Mahlkammer 3 abzuführen und Mahlgut mit einer Korngröße über dem ausgewählten Wert einem weiteren Mahlvorgang zuzuführen.

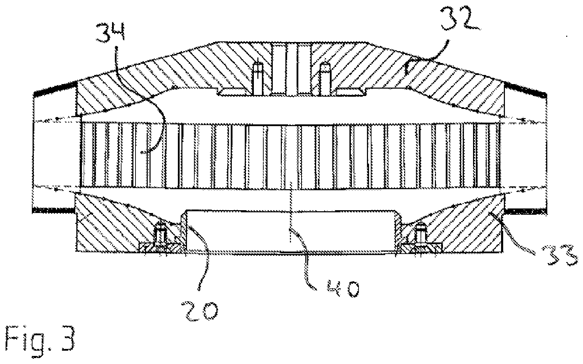

Das Sichtrad 8 kann ein bei Windsichtern übliches Sichtrad sein, dessen Schaufeln (siehe später z.B. im Zusammenhang mit der Fig. 3) radial verlaufende Schaufelkanäle begrenzen, an deren äußeren Enden die Sichtluft eintritt und Partikel kleinerer Korngröße oder Masse zum zentralen Auslass und zum Produktauslass 6 mitschleppt, während größere Partikel oder Partikel größerer Masse unter dem Einfluss der Fliehkraft abgewiesen werden. Insbesondere sind der Windsichter 7 und/oder zumindest dessen Sichtrad 8 mit wenigstens einem Gestaltungsmerkmal gemäß der EP 0 472 930 B1 ausgestattet.

Es kann nur ein Mahlstrahleinlass 5 z.B. bestehend aus einer einzigen, radial gerichteten Einlassöffnung oder Einlassdüse 9 vorgesehen sein, um einen einzigen Mahlstrahl 10 auf die Mahlgutpartikel, die von der Mahlgutaufgabe 4 aus in den Bereich des Mahlstrahles 10 gelangen, mit hoher Energie auftreffen und die Mahlgutpartikel in kleinere Teilpartikel zerlegen zu lassen, die vom Sichtrad 8 angesaugt und, soweit sie eine entsprechend geringe Größe bzw. Masse haben, durch den Produktauslass 6 nach außen gefördert werden. Eine bessere Wirkung wird jedoch mit paarweise diametral einander gegenüberliegenden Mahlstrahleinläßen 5 erzielt, die zwei aufeinander prallende Mahlstrahlen 10 bilden, die die Partikelzerlegung intensiver bewirken als dies mit nur einem Mahlstrahl 10 möglich ist, insbesondere wenn mehrere Mahlstrahlpaare erzeugt werden.

Ferner kann beispielsweise die Verarbeitungstemperatur beeinflusst werden durch Einsatz einer internen Heizquelle 11 zwischen Mahlgutaufgabe 4 und dem Bereich der Mahlstrahlen 10 oder einer entsprechenden Heizquelle 12 im Bereich außerhalb der Mahlgutaufgabe 4 oder durch Verarbeitung von Partikeln eines ohnehin schon warmen Mahlgutes, das unter Vermeidung von Wärmeverlusten in die Mahlgutaufgabe 4 gelangt, wozu ein Zuführungsrohr 13 von einem temperaturisolierenden Mantel 14 umgeben ist. Die Heizquelle 11 oder 12 kann, wenn sie eingesetzt wird, dem Grunde nach beliebig sein und daher zweckgerichtet einsatzfähig und gemäß der Verfügbarkeit am Markt ausgewählt werden, so dass weitere Erläuterungen dazu nicht erforderlich sind.

Für die Temperatur ist insbesondere die Temperatur des Mahlstrahls oder der Mahlstrahlen 10 relevant und die Temperatur des Mahlgutes sollte dieser Mahlstrahltemperatur zumindest annähernd entsprechen.

Zur Bildung der durch Mahlstrahleinläße 5 in die Mahlkammer 3 eingebrachten Mahlstrahlen 10 kann jeder/jedes bei den Betriebsbedingungen gasförmige Stoff oder Stoffgemisch verwendet werden. Besonders bevorzugt werden Luft und/oder Wasserstoffgas und/oder Argon und/oder Edelgase wie z. B. Helium und/oder Stickstoff und/oder Gemische der genannten Betriebsmittel verwendet. Dabei sollte sichergestellt werden, dass der Wärmeinhalt des Betriebsmediums nach der Einlassdüse 9 des jeweiligen Mahlstrahleinlasses 5 nicht wesentlich geringer ist als vor dieser Einlassdüse 9. Weil die für die Prallzerkleinerung notwendige Energie primär als Strömungsenergie zur Verfügung stehen soll, wird demgegenüber der Druckabfall zwischen dem Einlass 15 der Einlassdüse 9 und deren Auslass 16 erheblich sein (die Druckenergie wird weitestgehend in Strömungsenergie umgesetzt sein) und auch der Temperaturabfall wird nicht unerheblich sein. Insbesondere dieser Temperaturabfall soll durch die Erwärmung des Mahlgutes so weit kompensiert sein, dass Mahlgut und Mahlstrahl 10 im Bereich des Zentrums 17 der Mahlkammer 3 bei zumindest zwei aufeinander treffenden Mahlstrahlen 10 oder einem Vielfachen von zwei Mahlstrahlen 10 die gleiche Temperatur haben.

Verfahren zur Gestaltung und Durchführung der Aufbereitung des Mahlstrahles 10 sind dem Fachmann bekannt.

Bei der Darstellung des vorliegenden Ausführungsbeispiels der Strahlmühle 1 ist stellvertretend für jegliche Zufuhr eines Betriebsmittels oder Betriebsmediums B eine Reservoir- oder Erzeugungseinrichtung 18, wie beispielsweise ein Tank 18a dargestellt, woraus das Betriebsmittel oder Betriebsmedium B über Leitungseinrichtungen 19 zu dem Mahlstrahleinlass 5 oder den Mahlstrahleinläßen 5 zur Bildung des Mahlstrahles 10 bzw. der Mahlstrahlen 10 geleitet wird. Statt des Tanks 18a kann z.B. auch ein Kompressor verwendet werden, um entsprechendes Betriebsmedium B zur Verfügung zu stellen. Besonders bevorzugt wird jedoch ein einfaches Gebläse, ganz bevorzugt ein Drehkolbengebläse oder Radialventilator.

Insbesondere ausgehend von einer mit einem derartigen Windsichter 7 ausgestatteten Strahlmühle 1, wobei die diesbezüglichen Ausführungsbeispiele hierin nur als exemplarisch und nicht als beschränkend beabsichtigt und zu verstehen sind, wird mit dieser Strahlmühle 1 mit einem integrierten dynamischen Windsichter 7 ein Verfahren zur Erzeugung feiner Partikel durchgeführt. Als das Betriebsmittel B wird allgemein ein Fluid oder Gas verwendet, bevorzugt das bereits erwähnte Wasserstoffgas oder Heliumgas oder einfach Luft.

Weiterhin ist es vorteilhaft und daher bevorzugt, wenn der Sichtrotor 8 eine mit abnehmendem Radius, also zu seiner Achse hin zunehmende oder konstante lichte Höhe aufweist, wobei insbesondere die durchströmte Fläche des Sichtrotors 8 konstant ist. Zusätzlich oder alternativ kann eine Feingutaustrittskammer (nicht gezeigt) vorgesehen sein, die in Strömungsrichtung eine Querschnittserweiterung aufweist.

Eine besonders bevorzugte Ausgestaltung besteht bei der Strahlmühle 1 darin, dass der Sichtrotor 8 ein auswechselbares, mitrotierendes Tauchrohr 20 aufweist.

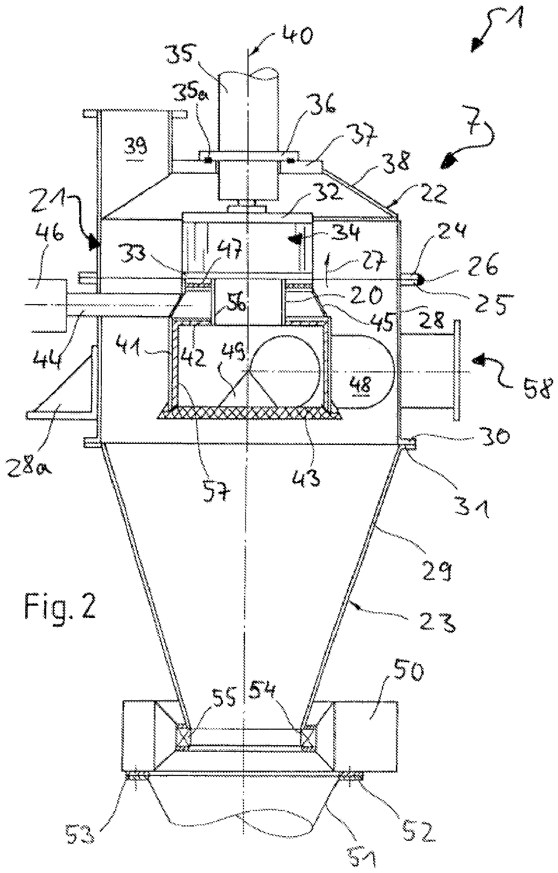

Nachfolgend werden unter Bezugnahme auf die Fig. 2 und Fig. 3 weitere Details und Varianten exemplarischer Ausgestaltungen der Strahlmühle 1 und ihrer Komponenten erläutert.

Die Strahlmühle 1 enthält, wie der schematischen Darstellung in der Fig. 2 zu entnehmen ist, einen integrierten Windsichter 7, bei dem es sich beispielsweise bei Bauarten der Strahlmühle 1 als Fliessbettgegenstrahlmühle oder als Dichtbettstrahlmühle um einen dynamischen Windsichter 7 handelt, der vorteilhafterweise im Zentrum der Mahlkammer 3 der Strahlmühle 1 angeordnet ist. In Abhängigkeit von Mahlgasvolumenstrom und Sichterdrehzahl kann die angestrebte Feinheit des Mahlgutes beeinflusst werden.

Bei dem Windsichter 7 der Strahlmühle 1 gemäß der Fig. 2 wird der gesamte vertikale Windsichter 7 von einem Sichtergehäuse 21 umschlossen, das im Wesentlichen aus dem Gehäuseoberteil 22 und dem Gehäuseunterteil 23 besteht. Das Gehäuseoberteil 22 und das Gehäuseunterteil 23 sind am oberen bzw. unteren Rand mit je einem nach außen gerichteten Umfangsflansch 24 bzw. 25 versehen. Die beiden Umfangsflansche 24, 25 liegen im Einbau- oder Funktionszustand des Windsichters 8 aufeinander und sind durch geeignete Mittel gegeneinander fixiert. Geeignete Mittel zum Fixieren sind beispielsweise Schraubverbindungen (nicht gezeigt). Als lösbare Befestigungsmittel können auch Klammern (nicht gezeigt) oder dergleichen dienen.

An einer praktisch beliebigen Stelle des Flanschumfangs sind beide Umfangsflansche 24 und 25 durch ein Gelenk 26 miteinander so verbunden, dass das Gehäuseoberteil 22 nach dem Lösen der Flanschverbindungsmittel gegenüber dem Gehäuseunterteil 23 nach oben in Richtung des Pfeils 27 geschwenkt werden kann und das Gehäuseoberteil 22 von unten sowie das Gehäuseunterteil 23 von oben zugänglich sind. Das Gehäuseunterteil 23 seinerseits ist zweiteilig ausgebildet und es besteht im Wesentlichen aus dem zylindrischen Sichtraumgehäuse 28 mit dem Umfangsflansch 25 an seinem oberen offenen Ende und einem Austragkonus 29, der sich nach unten kegelförmig verjüngt. Der Austragkonus 29 und das Sichtraumgehäuse 28 liegen am oberen bzw. unteren Ende mit Flanschen 30, 31 aufeinander und die beiden Flansche 30, 31 von Austragkonus 29 und Sichtraumgehäuse 28 sind wie die Umfangsflansche 24, 25 durch lösbare Befestigungsmittel (nicht gezeigt) miteinander verbunden. Das so zusammengesetzte Sichtergehäuse 21 ist in oder an Tragarmen 28a aufgehängt, von denen mehrere möglichst gleichmäßig beabstandet um den Umfang des Sichter- oder Verdichtergehäuses 21 des Windsichters 7 der Strahlmühle 1 verteilt sind und am zylindrischen Sichtraumgehäuse 28 angreifen.

Wesentliches Teil der Gehäuseeinbauten des Windsichters 7 ist wiederum das Sichtrad 8 mit einer oberen Deckscheibe 32, mit einer dazu axial beabstandeten unteren abströmseitigen Deckscheibe 33 und mit zwischen den Außenrändern der beiden Deckscheiben 32 und 33 angeordneten, mit diesen fest verbundenen und gleichmäßig um den Umfang des Sichtrades 8 verteilten Schaufeln 34 mit zweckmäßiger Kontur. Bei diesem Windsichter 7 wird der Antrieb des Sichtrades 8 über die obere Deckscheibe 32 bewirkt, während die untere Deckscheibe 33 die abströmseitige Deckscheibe ist. Die Lagerung des Sichtrades 8 umfasst eine in zweckmäßiger Weise zwangsweise angetriebene Sichtradwelle 35, die mit dem oberen Ende aus dem Sichtergehäuse 21 herausgeführt ist und mit ihrem unteren Ende innerhalb des Sichtergehäuses 21 in fliegender Lagerung drehfest das Sichtrad 8 trägt. Die Herausführung der Sichtradwelle 35 aus dem Sichtergehäuse 21 erfolgt in einem Paar bearbeiteter Platten 36, 37, die das Sichtergehäuse 21 am oberen Ende eines nach oben kegelstumpfförmig verlaufenden Gehäuseendabschnittes 38 abschließen, die Sichtradwelle 35 führen und diesen Wellendurchtritt ohne Behinderung der Drehbewegungen der Sichtradwelle 35 abdichten. Zweckmäßigerweise kann die obere Platte 36 als Flansch drehfest der Sichtradwelle 35 zugeordnet und über Drehlager 35a drehbar auf der unteren Platte 37 abgestützt sein, die ihrerseits einem Gehäuseendabschnitt 38 zugeordnet ist. Die Unterseite der abströmseitigen Deckscheibe 33 liegt in der gemeinsamen Ebene zwischen den Umfangsflanschen 24 und 25, so dass das Sichtrad 8 in seiner Gesamtheit innerhalb des klappbaren Gehäuseoberteils 22 angeordnet ist. Im Bereich des konischen Gehäuseendabschnittes 38 weist das Gehäuseoberteil 22 außerdem einen rohrartigen Produktaufgabestutzen 39 der Mahlgutaufgabe 4 auf, dessen Längsachse parallel zur Drehachse 40 des Sichtrades 8 und seiner Antriebs- oder Sichtradwelle 35 verläuft und der möglichst weit von dieser Drehachse 40 des Sichtrades 8 und seiner Antriebs- oder Sichtradwelle 35 entfernt, am Gehäuseoberteil 22 radial außen liegend angeordnet ist.

Das Sichtergehäuse 21 nimmt den achsgleich zum Sichtrad 8 angeordneten rohrförmigen Austrittsstutzen 20 auf, der mit seinem oberen Ende dicht unterhalb der abströmseitigen Deckscheibe 33 des Sichtrades 8 liegt, ohne jedoch mit diesem verbunden zu sein. An das untere Ende des als Rohr ausgebildeten Austrittsstutzens 20 ist eine Austrittskammer 41 achsgleich angesetzt, die ebenfalls rohrförmig ist, deren Durchmesser jedoch wesentlich größer ist als der Durchmesser des Austrittsstutzens 20 und beim vorliegenden Ausführungsbeispiel zumindest doppelt so groß wie der Durchmesser des Austrittsstutzens 20 ist. Am Übergang zwischen dem Austrittsstutzen 20 und der Austrittskammer 41 liegt also ein deutlicher Durchmessersprung vor. Der Austrittsstutzen 20 ist in eine obere Deckplatte 42 der Austrittskammer 41 eingesetzt. Unten ist die Austrittskammer 41 durch einen abnehmbaren Deckel 43 verschlossen. Die Baueinheit aus Austrittsstutzen 20 und Austrittskammer 41 ist in mehreren Tragarmen 44 gehalten, die sternförmig gleichmäßig um den Umfang der Baueinheit verteilt, mit ihren inneren Enden im Bereich des Austrittsstutzens 20 fest mit der Baueinheit verbunden und mit ihren äußeren Enden am Sichtergehäuse 21 befestigt sind.

Der Austrittsstutzen 20 ist von einem kegelförmigen Ringgehäuse 45 umgeben, dessen unterer, größerer Außendurchmesser zumindest etwa dem Durchmesser der Austrittskammer 41 und dessen oberer, kleinerer Außendurchmesser zumindest etwa dem Durchmesser des Sichtrades 8 entspricht. An der konischen Wand des Ringgehäuses 45 enden die Tragarme 44 und sind mit dieser Wand fest verbunden, die ihrerseits wieder Teil der Baueinheit aus Austrittsstutzen 20 und Austrittskammer 41 ist.

Die Tragarme 44 und das Ringgehäuse 45 sind Teile einer Spüllufteinrichtung (nicht gezeigt), wobei die Spülluft das Eindringen von Materie aus dem Innenraum des Sichtergehäuses 21 in den Spalt zwischen dem Sichtrad 8 oder genauer dessen unterer Deckscheibe 3 und dem Austrittsstutzen 20 verhindert. Um diese Spülluft in das Ringgehäuse 45 und von dort in den freizuhaltenden Spalt gelangen zu lassen, sind die Tragarme 44 als Rohre ausgebildet, mit ihren äußeren Endabschnitten durch die Wand des Sichtergehäuses 21 hindurchgeführt und über ein Ansaugfilter 46 an eine Spülluftquelle (nicht gezeigt) angeschlossen. Das Ringgehäuse 45 ist nach oben durch eine Lochplatte 47 abgeschlossen und der Spalt selbst kann durch eine axial verstellbare Ringscheibe im Bereich zwischen Lochplatte 47 und unterer Deckscheibe 33 des Sichtrades 8 einstellbar sein.

Der Auslass aus der Austrittskammer 41 wird von einem Feingutaustragrohr 48 gebildet, das von außen in das Sichtergehäuse 21 hineingeführt ist und in tangentialer Anordnung an die Austrittskammer 41 angeschlossen ist. Das Feingutaustragrohr 48 ist Bestandteil des Produktauslasses 6. Der Verkleidung der Einmündung des Feingutaustragrohrs 48 an die Austrittskammer 41 dient ein Abweiskegel 49.

Am unteren Ende des konischen Gehäuseendabschnittes 38 sind in horizontaler Anordnung eine Sichtlufteintrittsspirale 50 und ein Grobgutaustrag 51 dem Gehäuseendabschnitt 38 zugeordnet. Die Drehrichtung der Sichtlufteintrittsspirale 50 ist der Drehrichtung des Sichtrades 8 entgegengerichtet. Der Grobgutaustrag 51 ist dem Gehäuseendabschnitt 38 abnehmbar zugeordnet, wobei dem unteren Ende des Gehäuseendabschnittes 38 ein Flansch 52 und dem oberen Ende des Grobgutaustrages 51 ein Flansch 53 zugeordnet und beide Flansche 52 und 53 wiederum durch bekannte Mittel lösbar miteinander verbunden sind, wenn der Windsichter 7 betriebsbereit ist.

Die auszulegende Dispersionszone ist mit 54 bezeichnet. An der Innenkante bearbeitete (angefaste) Flansche für eine saubere Strömungsführung und eine einfache Auskleidung sind mit 55 bezeichnet.

Schließlich ist noch an die Innenwand des Austrittsstutzens 20 ein auswechselbares Schutzrohr 56 als Verschleißteil angelegt und kann ein entsprechendes auswechselbares Schutzrohr 57 an die Innenwand der Austrittskammer 41 angelegt sein.

Zu Beginn des Betriebs des Windsichters 7 im dargestellten Betriebszustand wird über die Sichtlufteintrittsspirale 50 Sichtluft in den Windsichter 7 unter einem Druckgefälle und mit einer zweckentsprechend gewählten Eintrittsgeschwindigkeit eingeführt. Infolge der Einführung der Sichtluft mittels einer Spirale insbesondere in Verbindung mit der Konizität des Gehäuseendabschnittes 38 steigt die Sichtluft spiralförmig nach oben in den Bereich des Sichtrades 8. Gleichzeitig wird das "Produkt" aus Feststoffpartikeln unterschiedlicher Masse über den Produktaufgabestutzen 39 in das Sichtergehäuse 21 eingegeben. Von diesem Produkt gelangt das Grobgut, d.h. der Partikelanteil mit größerer Masse entgegen der Sichtluft in den Bereich des Grobgutaustrages 51 und wird zur Weiterverarbeitung bereitgestellt. Das Feingut, d.h. der Partikelanteil mit geringerer Masse wird mit der Sichtluft vermischt, gelangt von außen nach innen radial durch das Sichtrad 8 in den Austrittsstutzen 20, in die Austrittskammer 41 und schließlich über ein Feingutaustrittsrohr 48 in einen Feingutaustritt oder - auslass 58, sowie von dort in ein Filter, in dem das Betriebsmittel in Form eines Fluides, wie beispielsweise Luft, und Feingut voneinander getrennt werden. Gröbere Feingutbestandteile werden aus dem Sichtrad 8 radial herausgeschleudert und dem Grobgut zugemischt, um das Sichtergehäuse 21 mit dem Grobgut zu verlassen oder so lange im Sichtergehäuse 21 zu kreisen, bis es zu Feingut einer solchen Körnung geworden ist, dass es mit der Sichtluft ausgetragen wird.

Infolge der abrupten Querschnittserweiterung vom Austrittsstutzen 20 zur Austrittskammer 41 findet dort eine deutliche Verringerung der Strömungsgeschwindigkeit des Feingut-Luft-Gemisches statt. Dieses Gemisch wird also mit sehr geringer Strömungsgeschwindigkeit durch die Austrittskammer 41 über das Feingutaustrittsrohr 48 in den Feingutauslass 58 gelangen und an der Wand der Austrittskammer 41 nur in geringem Masse Abrieb erzeugen. Deswegen ist das Schutzrohr 57 auch nur eine höchst vorsorgliche Maßnahme. Die aus Gründen einer guten Trenntechnik hohe Strömungsgeschwindigkeit im Sichtrad 8 herrscht jedoch noch im Austrag- oder Austrittsstutzen 20, weshalb das Schutzrohr 56 wichtiger ist als das Schutzrohr 57. Besonders bedeutsam ist der Durchmessersprung mit einer Durchmessererweiterung beim Übergang vom Austrittstutzen 20 in die Austrittskammer 41.

Im übrigen kann der Windsichter 7 durch die Unterteilung des Sichtergehäuses 21 in der beschriebenen Weise und die Zuordnung der Sichterkomponenten zu den einzelnen Teilgehäusen wiederum gut gewartet werden und können schadhaft gewordene Komponenten mit relativ geringem Aufwand und innerhalb kurzer Wartungszeiten ausgewechselt werden.

Während in der schematischen Darstellung der Fig. 2 das Sichtrad 8 mit den beiden Deckscheiben 32 und 33 und dem zwischen diesen angeordneten Schaufelkranz 59 mit den Schaufeln 34 noch in bereits bekannter, üblicher Form mit parallelen und parallelflächigen Deckscheiben 32 und 33 dargestellt ist, ist in Fig. 3 das Sichtrad 8 für ein weiteres Ausführungsbeispiel des Windsichters 7 einer vorteilhaften Weiterbildung dargestellt.

Dieses Sichtrad 8 gemäß der Fig. 3 enthält zusätzlich zu dem Schaufelkranz 59 mit den Schaufeln 34 die obere Deckscheibe 32 und die dazu axial beabstandete untere abströmseitige Deckscheibe 33 und ist um die Drehachse 40 und damit die Längsachse des Windsichters 7 drehbar. Die diametrale Ausdehnung des Sichtrades 8 ist senkrecht zur Drehachse 40, d.h. zur Längsachse des Windsichters 7, unabhängig davon ob die Drehachse 40 und damit die genannte Längsachse senkrecht steht oder horizontal verläuft. Die untere abströmseitige Deckscheibe 33 umschließt konzentrisch den Austrittsstutzen 20. Die Schaufeln 34 sind mit beiden Deckscheiben 33 und 32 verbunden. Die beiden Deckscheiben 32 und 33 sind nun abweichend vom Stand der Technik konisch ausgebildet und war vorzugsweise derart, dass der Abstand der oberen Deckscheibe 32 von der abströmseitigen Deckscheibe 33 vom Kranz 59 der Schaufeln 34 nach innen, d.h. zur Drehachse 40 hin, größer wird und zwar bevorzugt kontinuierlich, wie beispielsweise linear oder nicht linear, und mit weiterem Vorzug so, dass die Fläche des durchströmten Zylindermantels für jeden Radius zwischen Schaufelaustrittskanten und Austrittsstutzen 20 konstant bleibt. Die infolge des kleiner werdenden Radius bei bekannten Lösungen geringer werdende Abströmgeschwindigkeit bleibt bei dieser Lösung konstant.

Außer der vorstehend und in der Fig. 3 erläuterten Variante der Gestaltung der oberen Deckscheibe 32 und der unteren Deckscheibe 33 ist es auch möglich, dass nur eine dieser beiden Deckscheiben 32 oder 33 in der erläuterten Weise konisch ausgebildet ist und die andere Deckscheibe 33 bzw. 32 eben ist, wie dies im Zusammenhang mit dem Ausführungsbeispiel gemäß der Fig. 2 für beide Deckscheiben 32 und 33 der Fall ist. Insbesondere kann dabei die Form der nicht parallelflächigen Deckscheibe derart sein, dass zumindest annähernd so, dass die Fläche des durchströmten Zylindermantels für jeden Radius zwischen Schaufelaustrittskanten und Austrittsstutzen 20 konstant bleibt.

In einer speziellen Ausführungsform des erfindungsgemäßen Verfahrens wird während der Vermahlung ein Oberflächenmodifizierungsagenz zugegeben. Die Oberflächenmodifizierung im erfindungsgemäßen Verfahren ist besonders effektiv, da beim Zusammenprall der Partikel im Innern der Mühle eine Gutwolke aus den vermahlenen, feinen Partikeln gebildet wird in die das Oberflächenmodifizierungsagenz eingetragen, besonders bevorzugt eingesprüht, werden kann. Dadurch kommt das Oberflächenmodifizierungsagenz während der Anbindungsreaktion nicht in Kontakt mit den Wänden der Mühle, so dass Anbackungen verhindert werden. Diese Anbackungen stellen einen großen Nachteil und ein großes Problem der mechanischen bzw. klassierenden mechanischen Mühlen dar. Das Oberflächenmodifizierungsagenz wird bevorzugt über Düsen, bevorzugt Zweistoffdüsen eingetragen, wobei das Zersteubungsmedium das gleiche Medium wie das Mahlgas sein kann. Der Ort der Eindüsung ist bevorzugt innerhalb der unmittelbaren Mahlzone, besonders bevorzugt auf gleicher Höhe der Mahldüsen.

Einen besonderen Vorteil dieser Art der Oberflächenmodifizierung stellt die Tatsache dar, dass zur Coatung/Dotierung quasi in situ - durch die Vermahlung - entstandene aktive/frische Oberflächen zur Verfügung stehen. Dies erhöht die Wechselwirkung der Mahlgutoberflächen mit dem Coatungs-/Dotierungsmittel und kann u.a. zu einer stärkeren Anbindung führen. Ein weiterer Vorteil kann darin bestehen, dass durch die gleichzeitige Coatung/Dotierung während der Vermahlung eine Stabilisierung des Mahlgutes (z.B. gegen Reagglomeration) erreicht werden kann.

Grundsätzlich können im erfindungsgemäßen Verfahren alle Oberflächenmodifizierungsagenzien eingesetzt werden, welche unter den Mahlbedingungen als Flüssigkeit, Lösung oder Schmelze in den Mahlraum eingesprüht werden können. Bevorzugte Oberflächenmodifizierungsagenzien im Rahmen der vorliegenden Erfindung sind Natronwasserglas, Alkali (z.B. NaOH und KOH), Säuren (z.B. Schwefelsäure, Salzsäure, Salpetersäure), organische Siliziumverbindungen (z.B. modifizierte oder nicht modifizierte Silane, Polysiloxane, organische modifizierte Polysiloxane, Silikonöle, Siliconpolyetheracrylat), organische Polymere, Acrylate, Polyvinylalkohol (PVA), Wachse (z.B. Polyethylenwachse) und Metallsalze (Dotierung). Nicht ausschließliche Beispiele für solche Oberflächenmodifizierungsagenzien werden in der WO 2004/055120, der WO 2004/055105, der WO 2004/054927 oder der EP 1477457 genannt. Der Inhalt dieser Schriften wird hiermit explizit in den Gegenstand der vorliegenden Erfindung mit aufgenommen.

Besonders vorteilhaft erfolgt eine Oberflächenbelegung mit Silikonpolyetheracrylat-Polymeren, welche z. B. unter dem Namen TegoRad® vertrieben werden. Besonders bevorzugt handelt es sich um Silikonpolytheracrylat-Polymere oder Silikonpolythermethacrylat-Polymere wie sie in der EP 0999230 A1 beschrieben werden und ganz besonders bevorzugt um Polymere entsprechend der EP 0999230 A1 mit einem Polyetherüberschuß von 1 bis 50 Gew. %, bevorzugt 5 bis 30 Gew. %, besonders bevorzugt 10 bis 20 Gew. %. Der Gegenstand dieser Offenlegungsschrift wird hiermit explizit in den Gegenstand der vorliegenden Anmeldung mit aufgenommen.

Ganz besonders bevorzugt werden im Rahmen der vorliegenden Erfindung Feststoffe aus amorphem SiO₂, insbesondere Fällungskieselsäuren, Silikate (z.B. Aluminosilikate), Lichtbogenkieselsäure, pyrogene Kieselsäuren, Semigele oder Kieselgele in dieser Variante des erfindungsgemäßen Verfahrens vermahlen und mit Siliconpolyetheracrylaten, Polyvinylalkoholen (PVA), Acrylaten und Wachsen gecoatet bzw. dotiert. Diese Kombination aus Coatungsmittel bzw. Dotierungsmittel und Mahlgut ist besonders bevorzugt weil bei herkömmlichen Verfahren bislang zunächst eine Coatung bzw. Dotierung und anschließend eine Vermahlung in mechanischen bzw. klassierenden mechanischen Mühlen erfolgen musste. Es ist mit dem neuen Verfahren erstmals gelungen Coatung bzw. Dotierung und Vermahlung in einem Schritt zusammenzufassen und dennoch eine Korngrößenverteilung des Mahlgutes zu erzielen welches dem herkömmlichen Verfahren mit den mechanischen bzw. klassierenden mechanischen Mühlen mindestens gleichwertig und oft sogar überlegen ist. Im Vergleich zu herkömmlichen Verfahren wird bei dieser Materialkombination somit einerseits ein Verfahrensschritt eingespart, andererseits aber auch ein überlegenes Produkt erzielt, da das erfindungsgemäße Verfahren auf Grund des effizienteren Energieumsatzes zu einem geringeren Anteil an Feinstanteil in der Korngrößenverteilung führt und eine vollständige Coatung/Dotierung der Oberflächen des Mahlgutes möglich ist.

Obwohl mit dem erfindungsgemäßen Verfahren prinzipiell alle organischen und anorganischen Feststoffe vermahlen werden können, bietet das Verfahren für amorphe Oxide von Metallen der 3. und 4. Hauptgruppe des Periodensystems der Elemente besondere Vorteile. Dies gilt sowohl für die Gele als auch für die amorphen Feststoffe mit andersartiger Struktur. Besonders vorteilhaft sind gefällte Kieselsäuren, pyrogene Kieselsäuren, Lichtbogenkieselsäuren, Silikate, Semigele und Silicagele, wobei Silicagele sowohl Hydro- als auch Aero- als auch Xerogele umfassen. Diese Materialen werden häufig in Anwendungen eingesetzt, z. B. als Mattierungsmittel in Lacken, wo es auf eine genau definierte Korngrößerverteilung ankommt und z. B. ein zu hoher Feinanteil schädlich ist, da die Verdickungseigenschaften dadurch beeinträchtigt werden. Zusätzlich zu der speziellen Korngrößenverteilung ist eine geringe Kontamination mit Verunreinigungen wie z. B. Eisen in vielen Anwendungen sehr vorteilhaft. Mit dem erfindungsgemäßen Verfahren ist es nun erstmals gelungen amorphe Oxide von Metallen der 3. und 4. Hauptgruppe des Periodensystems der Elemente, insbesondere Siliciumdioxide mit einer speziellen Korngrößenverteilung in Kombination mit einer sehr geringen Kontamination mit Fremdelementen herzustellen.

### Messmethoden

### Bestimmung der Partikelgröße mittels Laserbeugung

Die Anwendung der Laserbeugung zur Bestimmung von Partikelgrößenverteilungen pulverförmiger Feststoffe basiert auf dem Phänomen, dass Partikel in Abhängigkeit von ihrer Größe das Licht eines monochromen Laserstrahls mit differierenden Intensitätsmustern in alle Richtungen streuen bzw. beugen. Je kleiner der Durchmesser des angestrahlten Partikels ist, desto größer sind die Streuungs- bzw. Beugungswinkel des monochromen Laserstrahls.

Die nachfolgende Durchführung der Messung wird anhand von Fällungskieselsäureproben beschrieben.
Die Probenvorbereitung und Messung erfolgt im Falle hydrophiler Fällungskieselsäuren mit VE-Wasser als Dispergierflüssigkeit, im Falle nicht ausreichend mit Wasser benetzbarer Fällungskieselsäuren mit reinem Ethanol. Vor Beginn der Messung lässt man das Laserbeugungsmeßgerät LS 230 (Fa. Beckman Coulter; Meßbereich: 0,04 - 2000pm) und das Flüssigkeitsmodul (Small Volume Module Plus, 120 ml, Fa. Beckman Coulter) 2 h warmlaufen und spült das Modul dreimal mit VE-Wasser. Zur Messung hydrophober Fällungskieselsäuren wird der Spülvorgang mit reinem Ethanol durchgeführt.

In der Gerätesoftware des Laserbeugungsmeßgerätes LS 230 werden die folgenden für eine Auswertung nach der Mie-Theorie relevanten optischen Parameter in einer .rfd-Datei festgelegt:
Brechungsindex der Dispergierflüssigkeit B. I. Real_{Wasser} = 1,332 (1,359 für Ethanol) Brechungsindex des Feststoffes (Probenmaterial) Real_{Kieselsäure} = 1,46
Imaginär = 0,1
Formfaktor = 1

Weiterhin sind folgende für die Partikelmessung relevanten Parameter einzustellen:
Messzeit = 60 s
Anzahl der Messungen = 1
Pumpengeschwindigkeit = 75 %

Die Probenzugabe kann in Abhängigkeit von der Probenbeschaffenheit direkt als pulverförmiger Feststoff mithilfe eines Spatels oder in suspendierter Form mithilfe einer 2 ml Einwegpipette in das Flüssigkeitsmodul (Small Volume Module Plus) des Gerätes erfolgen. Ist die zur Messung erforderliche Probenkonzentration erreicht (optimale optische Abschattung), meldet die Gerätesoftware des Laserbeugungsmeßgerätes LS 230 ein "OK".
Vermahlene Fällungskieselsäuren werden durch 60 s Ultrabeschallung mittels Ultraschallprozessor Vibra Cell VCX 130 der Firma Sonics mit Ultraschallkonverter CV 181 und 6 mm Ultraschallspitze bei 70 % Amplitude und gleichzeitigem Umpumpen im Flüssigkeitsmodul dispergiert. Im Falle von unvermahlenen Fällungskieselsäuren erfolgt die Dispergierung ohne Ultrabeschallung durch 60 s Umpumpen im Flüssigkeitsmodul.
Die Messung erfolgt bei Raumtemperatur. Aus den Rohdaten berechnet die Gerätesoftware auf Basis der Mie-Theorie mithilfe der zuvor festgelegten optischen Parameter (.rfd-Datei) die Volumenverteilung der Partikelgrößen und den d50-Wert (Medianwert).

Die ISO 13320 "Particle Size Analysis - Guide to Laser Diffraction Methods" beschreibt die Methode der Laserbeugung zur Bestimmung von Partikelgrößenverteilungen detailliert. Dort findet der Fachmann eine Auflistung der für eine Auswertung nach der Mie-Theorie relevanten optischen Parameter gängiger Feststoffe und Dispergierflüssigkeiten.

### Beispiel 1:

In einer AFG 200 Aeroplex-Fließbett-Gegenstrahlmühle, der Fa. Hosokawa Alpine AG wurde ACEMATT® HK400, der Firma Evonik Degussa GmbH bei einer Mahllufteintrittstemperatur von 76 °C (Mahlkammerinnenraum-Temperatur = 60 °C) und einem Druck von 0,4 bar (abs) vermahlen und mit dem Silikonpolyetheracrylat Tego® Rad 2300 belegt. Dabei wird das Coatungsmittel über eine Zweistoffdüse (in den Figuren 1 bis 3 nicht eingezeichnet), welche sich in der gleichen Ebene befindet wie die Mahldüsen (3 Mahldüsen im Abstand von 120° und zwischen zwei dieser Mahldüsen die Zweistoffdüse im Abstand von 60°), in die Mühle eingedüst. Es wurden 7,4 Massenprozent TegoRad® 2300 (TegoRad® 2300 weist einen Kohlenstoffgehalt von ca. 43,9 Gew.% auf) aufgegeben. Es wurde im Endprodukts ein Kohlenstoffgehalt von 3,2 Gew.-% gefunden, d.h. unter Berücksichtigung des C-Gehalts von TegoRad® 2300 wurde eine in etwa quantitative Belegung ohne Polyetherverlust erreicht. Bei einer Naßcoatung und gleicher prozentualer Zugabe von TegoRad® 2300 wurde im Endprodukt nur zwischen 2,5 und 2,8 Gew. % Kohlenstoff gefunden. Eine beachtliche Menge des Oberflächenmodifizierungsganenzes findet sich somit bei der Naßcoatung nicht auf der Kieselsäure, sondern wurde mit dem Wasser ausgewaschen. Dies zeigt den besonderen Vorteil des erfindungsgemäßen Verfahrens bei der Belegung von Trägermaterialien mit Oberflächenmodifizierungsagentien mit wasserlöslichen Anteilen. Das Produkt weist einen d₅₀-Wert von 4,7 µm auf.

### Beispiel 2.

Sipernat® 50, der Firma Evonik Degussa GmbH wurde in einer Fließbettgegenstrahlmühle, Typ CGS 50, der Fa. Netzsch-Condux, bei einer Mahllufttemperatur von 80 °C und einem Druck von 0,36 bar (abs) und mit PE Wax der Fa. Deurex (Schmelzbereich: 98-103 °C) belegt. Die Durchführung der Coatung erfolgt analog Beispiel 1. Das Produkt weist einen d₅₀-Wert von 5,8 µm auf.

### Beispiel 3:

Die abrasive Zahnpastenkieselsäure Sident® 9 der Firma Evonik Degussa GmbH wurde einmal nach dem erfindungsgemäßen Verfahren in der Fließbettgegenstrahlmühle, Typ CGS 50, der Fa. Netzsch-Condux, wie in Beispiel 2 vermahlen. Alternativ wurde Sident® 9 in einer mechanischen Schlägerwerksmühle UPZ 160, der Firma Alpine vermahlen. Bei der mechanischen Schlägerwekrsmühle ergab sich bei einer mittleren Durchsatzmenge von ca. 600kg ein Abrieb von ca. 6,5g, dies entspricht einer Zunahme der Eisenverunreinigung von 11 ppm. Bei der erfindungsgemäßen Vermahlung lag die Zunahme der Eisenverunreinigung bei weniger als 1 ppm.

### Bezugszeichenliste

1 : Strahlmühle
2 : zylindrisches Gehäuse
3 : Mahlkammer
4 : Mahlgutaufgabe
5 : Mahlstrahleinlass
6 : Produktauslass
7 : Windsichter
8 : Sichtrad
9 : Einlassöffnung oder Einlassdüse
10 : Mahlstrahl
11 : Heizquelle
12 : Heizquelle
13 : Zuführungsrohr
14 : temperaturisolierender Mantel
15 : Einlass
16 : Auslass
17 : Zentrum der Mahlkammer
18 : Reservoir- oder Erzeugungseinrichtung, bevorzugt ein Gebläse
19 : Leitungseinrichtungen
20 : Austrittsstutzen
21 : Sichtergehäuse
22 : Gehäuseoberteil
23 : Gehäuseunterteil
24 : Umfangsflansch
25 : Umfangsflansch
26 : Gelenk
27 : Pfeil
28 : Sichtraumgehäuse
28a : Tragarme
29 : Austragkonus
30 : Flansch
31 : Flansch
32 : Deckscheibe
33 : Deckscheibe
34 : Schaufel
35 : Sichtradwelle
35a : Drehlager
36 : obere bearbeitete Platten
37 : untere bearbeitete Platte
38 : Gehäuseendabschnitt
39 : Produktaufgabestutzen
40 : Drehachse
41 : Austrittskammer
42 : obere Deckplatte
43 : abnehmbarer Deckel
44 : Tragarme
45 : kegelförmiges Ringgehäuse
46 : Ansaugfilter
47 : Lochplatte
48 : Feingutaustragrohr
49 : Abweiskegel
50 : Sichtlufteintrittsspirale
51 : Grobgutaustrag
52 : Flansch
53 : Flansch
54 : Dispersionszone
55 : an der Innenkante bearbeitete (angefaste) Flansche und Auskleidung
56 : auswechselbares Schutzrohr
57 : auswechselbares Schutzrohr
58 : Feingutaustritt/-auslass
59 : Schaufelkranz

## Patentansprüche

1. Verfahren zur Erzeugung feiner Partikel mittels einer Strahlmühle, **dadurch gekennzeichnet, dass** das Mahlgas einen Druck von ≤ 4 bar(abs) und eine Temperatur von kleiner 100 °C aufweist, während der Vermahlung ein Coatungsmittel bzw. Dotierungsmittel derart zugegeben wird, dass zumindest Teile der Oberfläche der Partikel des Mahlguts mit dem Coatungsmittel bzw. Dotierungsmittel belegt werden und das Mahlgut amorphes SiO₂ und das Coatungsmittel bzw. Dotierungsmittel Siliconpolyetheracrylat, Polyvinylalkohol, Acrylat oder Wachs ist.

2. Verfahren nach Anspruch 1, **dadurch gekennzeichnet, dass** eine Ovalrohrmühle oder eine Spiralstrahlmühle mit statischer Sichtung verwendet wird.

3. Verfahren nach Anspruch 1, **dadurch gekennzeichnet, dass** eine Fliessbettgegenstrahlmühle oder eine Dichtbettstrahlmühle, bevorzugt mit einem Sichter, besonders bevorzugt mit einem dynamischen Windsichter, ganz besonders bevorzugt eine Strahlmühle (1) mit darin integriertem dynamischem Windsichter (7) verwendet wird.

4. Verfahren nach Anspruch 3, **dadurch gekennzeichnet, dass** der Windsichter (7) einen Sichtrotor oder ein Sichtrad (8) mit einer mit abnehmendem Radius zunehmenden oder konstanten lichten Höhe enthält, so dass beim Betrieb die durchströmte Fläche des Sichtrotors oder -rades (8) zumindest annähernd konstant ist.

5. Verfahren nach Anspruch 3 oder 4, **dadurch gekennzeichnet, dass** der Windsichter (7) einen Sichtrotor oder ein Sichtrad (8) mit einem insbesondere auswechselbaren Tauchrohr (20) enthält, das so gestaltet ist, dass es sich mitdreht, wenn der Sichtrotor oder das Sichtrad (8) rotiert.

6. Verfahren nach einem der Ansprüche 3 bis 5, **dadurch gekennzeichnet, dass** eine Feingutaustrittskammer (41) vorgesehen ist, die in Strömungsrichtung eine Querschnittserweiterung aufweist.

7. Verfahren nach einem der Ansprüche 1 bis 6, **dadurch gekennzeichnet, dass** zur Erzeugung des Drucks und der Temperatur des Betriebsmittels ein einfaches Gebläse, vorzugsweise ein Drehkolbengebläse oder ein Radialgebläse verwendet wird.

8. Verfahren nach einem der Ansprüche 1 bis 7, **dadurch gekennzeichnet, dass** als Betriebsmittel Luft und/oder Argon und/oder Edelgase, bevorzugt Helium, und/oder Stickstoff und/oder ein Gemisch der genannten Betriebsmittel verwendet wird.

9. Verfahren nach einem der Ansprüche 1 bis 8, **dadurch gekennzeichnet, dass** die Temperatur des Mahlgases kleiner gleich 95 °C, bevorzugt kleiner gleich 90 °C, besonders bevorzugt kleiner gleich 80 °C und ganz besonders bevorzugt von 15 bis 80 °C oder 50 bis 80 °C oder 15 bis 50 °C beträgt.

10. Verfahren nach einem der Ansprüche 1 bis 9, **dadurch gekennzeichnet, dass** der Druck des Mahlgases weniger als 3 bar, bevorzugt weniger als 2 bar, besonders bevorzugt weniger als 1 bar, speziell bevorzugt 0,5 bis 1 bar und ganz speziell bevorzugt 0,15 bis 0,5 bar, beträgt.

11. Verfahren nach Anspruch 9 oder 10, **dadurch gekennzeichnet, dass** es mit folgender Kombination von Mahlgasdruck und Temperatur betrieben wird: 0,15 bis 0,5 bar und 15 bis 50 °C bzw. 0,15 bis 0,5 bar und 50 bis 80 °C.

12. Produkt erhältlich nach einem Verfahren nach einem der Ansprüche 1 bis 10.

## Claims

1. Process for generating fine particles by means of a jet mill, **characterized in that** the milling gas has a pressure of ≤ 4 bar (abs) and a temperature of less than 100°C, during the milling a coating agent or doping agent is added in such a way that at least parts of the surface of the particles of the material for milling are covered with the coating agent or doping agent and the material for milling is amorphous SiO₂ and the coating agent or doping agent is silicone polyether acrylate, polyvinyl alcohol, acrylate or wax.

2. Process according to Claim 1, **characterized in that** an oval tube mill or a spiral jet mill with static classifying is used.

3. Process according to Claim 1, **characterized in that** a fluidized-bed opposed-jet mill or a dense-bed jet mill, with preference with a classifier, with particular preference with a dynamic air classifier, with most particular preference a jet mill (1) with a dynamic air classifier (7) integrated in it, is used.

4. Process according to Claim 3, **characterized in that** the air classifier (7) includes a classifying rotor or a classifying wheel (8) with a clear height that is constant or increases with decreasing radius, so that the surface area of the classifying rotor or wheel (8) that is flowed through during operation is at least approximately constant.

5. Process according to Claim 3 or 4, **characterized in that** the air classifier (7) includes a classifying rotor or classifying wheel (8) with an immersion tube (20), in particular an exchangeable immersion tube (20), which is designed in such a way that, when the classifying rotor or the classifying wheel (8) rotates, it rotates along with it.

6. Process according to one of Claims 3 to 5, **characterized in that** a fines outlet chamber (41), which has a cross-sectional widening in the direction of flow, is provided.

7. Process according to one of Claims 1 to 6, **characterized in that** a simple blower, preferably a rotary blower or a radial blower, is used for generating the pressure and the temperature of the operating medium.

8. Process according to one of Claims 1 to 7, **characterized in that** air and/or argon and/or noble gases, with preference helium, and/or nitrogen and/or a mixture of the operating media mentioned is used as the operating medium.

9. Process according to one of Claims 1 to 8, **characterized in that** the temperature of the milling gas is less than or equal to 95°C, with preference less than or equal to 90°C, with particular preference less than or equal to 80°C and with most particular preference from 15 to 80°C or 50 to 80°C or 15 to 50°C.

10. Process according to one of Claims 1 to 9, **characterized in that** the pressure of the milling gas is less than 3 bar, with preference less than 2 bar, with particular preference less than 1 bar, with specific preference 0.5 to 1 bar and with most specific preference 0.15 to 0.5 bar.

11. Process according to Claim 9 or 10, **characterized in that** it is operated with the following combination of milling gas pressure and temperature: 0.15 to 0.5 bar and 15 to 50°C or 0.15 to 0.5 bar and 50 to 80°C.

12. Product obtainable by a process according to one of Claims 1 to 10.

## Revendications

1. Procédé de génération de particules fines au moyen d'un broyeur à jet, **caractérisé en ce que** le gaz de broyage présente une pression ≤ 4 bar (abs) et une température inférieure à 100 °C, un agent de revêtement ou un agent dopant est ajouté pendant le broyage de telle sorte qu'au moins des parties de la surface des particules du produit broyé soient garnies avec l'agent de revêtement ou l'agent dopant, et le produit broyé est du SiO₂ amorphe, et l'agent de revêtement ou l'agent dopant est du polyéther-acrylate de silicium, de l'alcool polyvinylique, de l'acrylate ou de la cire.

2. Procédé selon la revendication 1, **caractérisé en ce qu'**un broyeur à tube ovale ou un broyeur à jet en spirale muni d'un tamisage statique est utilisé.

3. Procédé selon la revendication 1, **caractérisé en ce qu'**un broyeur à contre-jet en lit fluidisé ou un broyeur à jet en lit dense, de préférence muni d'un tamiseur, de manière particulièrement préférée muni d'un tamiseur pneumatique dynamique, de manière tout particulièrement préférée un broyeur à jet (1) muni d'un tamiseur pneumatique dynamique intégré dans celui-ci (7), est utilisé.

4. Procédé selon la revendication 3, **caractérisé en ce que** le tamiseur pneumatique (7) contient un rotor de tamisage ou une roue de tamisage (8) ayant une hauteur intérieure croissante ou constante lorsque le rayon est décroissant, de telle sorte que lors de l'exploitation, la surface traversée du rotor ou de la roue de tamisage (8) soit au moins approximativement constante.

5. Procédé selon la revendication 3 ou 4, **caractérisé en ce que** le tamiseur pneumatique (7) contient un rotor de tamisage ou une roue de tamisage (8) muni d'un tube d'immersion (20) notamment remplaçable, qui est conçu de telle sorte qu'il soit mis en rotation lorsque le rotor de tamisage ou la roue de tamisage (8) est en rotation.

6. Procédé selon l'une quelconque des revendications 3 à 5, **caractérisé en ce qu'**une chambre de sortie de produit fin (41) est prévue, qui présente un élargissement de section transversale dans la direction d'écoulement.

7. Procédé selon l'une quelconque des revendications 1 à 6, **caractérisé en ce qu'**un ventilateur simple, de préférence un ventilateur à piston rotatif ou un ventilateur radial, est utilisé pour générer la pression et la température de l'agent d'exploitation.

8. Procédé selon l'une quelconque des revendications 1 à 7, **caractérisé en ce que** de l'air et/ou de l'argon et/ou des gaz nobles, de préférence de l'hélium, et/ou de l'azote et/ou un mélange des agents d'exploitation mentionnés, est utilisé en tant qu'agent d'exploitation.

9. Procédé selon l'une quelconque des revendications 1 à 8, **caractérisé en ce que** la température du gaz de broyage est inférieure ou égale à 95 °C, de préférence inférieure ou égale à 90 °C, de manière particulièrement préférée inférieure ou égale à 80 °C et de manière tout particulièrement préférée de 15 à 80 °C ou de 50 à 80 °C ou de 15 à 50 °C.

10. Procédé selon l'une quelconque des revendications 1 à 9, **caractérisé en ce que** la pression du gaz de broyage est inférieure à 3 bar, de préférence inférieure à 2 bar, de manière particulièrement préférée inférieure à 1 bar, de manière spécialement préférée de 0,5 à 1 bar et de manière tout spécialement préférée de 0,15 à 0,5 bar.

11. Procédé selon la revendication 9 ou 10, **caractérisé en ce qu'**il est exploité avec la combinaison suivante de pression de gaz de broyage et de température : 0,15 à 0,5 bar et 15 à 50 °C ou 0,15 à 0,5 bar et 50 à 80 °C.

12. Produit pouvant être obtenu par un procédé selon l'une quelconque des revendications 1 à 10.
